# EUROPÄISCHE PATENTSCHRIFT

(11) **EP 3 558 788 B1**
(45) Veröffentlichungstag und Bekanntmachung des Hinweises auf die Patenterteilung: **17.09.2025**
(21) Anmeldenummer: 17816722.7
(22) Anmeldetag: 12.12.2017
(51) Int. Cl.: B61L 25/02, B61L 15/00

(54) **VERFAHREN UND STEUEREINHEIT ZUR ENTGLEISUNGSDETEKTION ANHAND VON RADDREHZAHLSIGNALEN**
METHOD AND CONTROL UNIT FOR DETECTION OF DERAILMENT ON THE BASIS OF WHEEL SPEED SIGNALS
PROCÉDÉ ET UNITÉ DE CONTRÔLE DE DÉTECTION DE DÉRAILLEMENT À L'AIDE DE SIGNAUX DE VITESSE DE ROTATION DE ROUE

(30) Priorität: 21.12.2016 DE 102016125196
(43) Veröffentlichungstag der Anmeldung: 30.10.2019
(73) Patentinhaber: KNORR-BREMSE Systeme für Schienenfahrzeuge GmbH, 80809 München (DE)
(72) Erfinder: ETZBACH, Andrea, 80807 München (DE); FRIESEN, Ulf, 85579 Neubiberg (DE); KREISEL, Norman, 01728 Bannewitz (DE)
(86) Internationale Anmeldenummer: PCT/EP2017/082386
(87) Internationale Veröffentlichungsnummer: WO 2018/114474

(56) Entgegenhaltungen:
- WO-A1-01/94174
- WO-A1-2012/140073
- AU-A1- 2014 369 839
- AU-A1- 2014 369 839
- DE-A1- 102011 001 978
- DE-A1- 102011 001 978
- DE-A1- 102011 001 978
- DE-A1- 102014 108 685
- DE-C1- 19 835 041

## Beschreibung

Die vorliegende Erfindung bezieht sich auf ein Verfahren zur Detektion eines Entgleisungszustandes eines oder mehrerer Räder eines Schienenfahrzeugs anhand von Raddrehzahlsignalen.

Im Fahrbetrieb von Schienenfahrzeugen, insbesondere von langen Zügen, besteht die Möglichkeit, dass einzelne Räder, Radsätze oder gesamte Drehgestelle unbemerkt vom Fahrzeugführer entgleisen. Dadurch wird das entgleiste Rad, der Radsatz, das Drehgestell oder der gesamte Wagen vom Schienenfahrzeug mitgeschleift, wobei beispielsweise das Rad immer wieder auf dem Streckenoberbau aufschlägt. Dies kann zu erheblichen Beschädigungen des Gleisoberbaus, des Schienenfahrzeugs oder beiden führen.

Ein weiteres hohes Unfallrisiko besteht darin, dass das entgleiste Schienenfahrzeug nicht mehr in der üblichen Fahrtrichtung orientiert ist, sondern in der Projektion quer zur Fahrtrichtung über die übliche Fahrzeugbreite hinausragt. Dies kann zu schweren Unfällen mit erheblichen Sachschäden, bis hin zu Personenschäden führen, wenn das Schienenfahrzeug ein Hindernis, wie die Einfassung eines Tunnels, oder einen Brückenpfeiler trifft.

Aus diesem Grund ist es sinnvoll, eine Entgleisung einzelner Räder, Radsätze, Drehgestelle, oder gesamter Wagen, rechtzeitig zu erkennen und entsprechende Gegenmaßnahmen einzuleiten. Die Gegenmaßnahmen können dabei automatisch oder durch den Fahrzeugführer eingeleitet werden. Eine Gegenmaßnahme stellt beispielsweise die unmittelbare Abbremsung des entgleisten Schienenfahrzeugs bis zum Stillstand dar.

Darüber hinaus ist ein Verfahren vorteilhaft, welches eine kritische Fahrsituation schon vor einer tatsächlich auftretenden Entgleisung zuverlässig erkennt und entsprechende Gegenmaßnahmen einleitet.

Eine Entgleisungsdetektion wird künftig von verschiedenen Richtlinien und Normen gefordert, so wird z.B. in der DIN EN 62267 ein System zur Erkennung von Entgleisung im fahrerlosen Betrieb gefordert.

Vor diesem Hintergrund befindet sich eine Reihe von derartigen Systemen im industriellen Einsatz bzw. sind derartige Systeme in Patenten beschrieben.

WO 2012140073 A1 beschreibt ein Verfahren zur Entgleisungsdetektion mittels der Differenz eines Raddrehzahlsignals und einer erwarteten Drehzahl. Um den Fahrzustand stets zuverlässig feststellen zu können, wird in die Berechnung ein Abnutzungsfaktor der Räder mit aufgenommen, da sich durch die Abnutzung des Rades das Verhältnis Raddrehzahl zu Fahrgeschwindigkeit verändert.

WO 2001094174 A1 beschreibt ein Verfahren zur Entgleisungsdetektion mittels eines Vergleichs der Raddrehzahlen untereinander oder eines Vergleichs der Raddrehzahlen mit einem Mittelwert mehrerer Raddrehzahlen.

Beide Erfindungen nutzen zur Detektion einer Entgleisung die Abweichung mindestens eines Drehzahlsignals von einem Sollwert. Nachteilig daran ist vor allem, dass durch auftretende Drehzahlschwankungen die Grenzwerte fälschlicherweise überschritten werden können und somit vergleichsweise aufwendige Auswertemaßnahmen zu treffen sind, um eine Entgleisung sicher zu detektieren.

EP 1236633 A2 beschreibt ein Verfahren zur Entgleisungsdetektion mittels der Auswertung verschiedenster Kennwerte, unter Anderem der Auswertung von Verläufen der Winkelgeschwindigkeit bzw. Winkelbeschleunigung des Rades.

Es wird vorgeschlagen, zur Detektion der Entgleisung den Zeitverlauf der Drehfrequenz der Räder zweimal nach der Zeit zu differenzieren und dadurch ein wechselhaftes Beschleunigungsverhalten des Rades oder der Radsatzwelle, wie für eine Entgleisung charakteristisch, zu detektieren. Dieses wechselhafte Beschleunigungsverhalten des Rades oder der Radsatzwelle wird wieder durch das unregelmäßige Aufschlagen des entgleisten Rades auf dem Boden verursacht.

Allerdings erfordert die Verarbeitung der Ableitung eines Zeitsignals stets großen Aufwand, da auch Abbremsungen, welche mit zeitlich veränderlicher Verzögerung geschehen, in der zweiten Ableitung der Drehfrequenz des Rades von Null verschieden und somit sichtbar sind.

In einer weiteren Ausführungsform dieser Erfindung wird der Abgleich der Raddrehzahlen untereinander, ähnlich wie in WO 2001094174 A1 beschrieben.

Zur Durchführung des Verfahrens werden zusätzlich zur Drehfrequenzermittlung beispielsweise auch Beschleunigungssignale benötigt, was zusätzliche Anforderungen an die im Schienenfahrzeug verbaute Sensorik stellt.

Die DE 10 2011 001 978 A1 zeigt ein Verfahren zur Entgleisungsüberwachung wenigstens eines Rades eines Fahrwerks eines Schienenfahrzeugs.

Aus der DE 198 35 041 C1 ist eine Kontrollvorrichtung für Radabläufe an Hochgeschwindigkeits-Schienenfahrzeugen bekannt.

Es ist die Aufgabe der folgenden Erfindung, ein Verfahren bereitzustellen, das die oben genannten Probleme löst und sich zudem vorzugsweise durch Verwendung von ohnehin im Fahrzeug vorhandener, bzw. leicht nachzurüstender Sensorik und Verarbeitungseinrichtungen auszeichnet und welches vorzugsweise leicht auf einem vorhandenen Steuergerät implementierbar ist.

Diese Aufgabe wird mittels der unabhängigen Ansprüche gelöst. Vorteilhafte Weiterbildungen sind Gegenstand der Unteransprüche.

Vorzugsweise nutzt das Verfahren ein Drehzahlsignal mindestens einer Drehzahlerfassungsvorrichtung, die vorzugsweise im Schienenfahrzeug verbaut ist, um eine Raddrehzahl zu ermitteln, um Kenntnisse über den aktuellen Fahrzustand (z.B. die Raddrehzahl oder die Geschwindigkeit) zu erhalten.

Diese Drehzahlerfassungsvorrichtung ist vorzugsweise als Drehzahlsensor ausgeführt, welcher Impulsgebersignale aus der Raddrehzahl erzeugt.

Es sind Ausführungsformen mit Sensoranordnungen und -kombinationen denkbar, die eine Messung der Raddrehzahl einzelner Räder, Radsätze oder gesamter Drehgestelle ermöglichen.

Das Drehzahlrohsignal des Drehzahlsensors kann dabei in analoger oder digitaler Form vorliegen. Das Drehzahlrohsignal des Sensors kann dabei vorzugsweise als Polradfrequenz, Winkelgeschwindigkeit, oder in einer anderen geeigneten Form vorliegen.

Das Drehzahlrohsignal wird zur weiteren Verarbeitung an eine Auswerteeinrichtung übergeben. Diese beinhaltet vorzugsweise Abschnitte zur Signalaufbereitung, Kennwertbestimmung und Fahrzustandsbewertung.

Vorzugsweise wird das Drehzahlrohsignal zunächst einem Signalaufbereitungsabschnitt übergeben, in dem die Aufbereitung des Signals zur weiteren Verarbeitung erfolgt. Dabei können vorzugsweise Signalaufbereitungsmethoden und Methoden zur vorausgehenden Analyse des Drehzahlrohsignals, wie Anti-Aliasing-Filterung, Digitalisierung eines analogen Signals, Veränderung oder Anpassung der Abtastung, Offsetabgleich, physikalische Umrechnung, Fouriertransformation, Hüllkurvenbildung, Extremwertbestimmung, Plausibilisierung etc. auf das Drehzahlrohsignal angewandt werden.

Eine vorteilhafte Ausführungsform einer Hüllkurvenbildung stellt beispielsweise die Bildung einer schlauchförmigen Hüllkurve um das Drehzahlrohsignal dar, um unter anderem den Zeitverlauf des Drehzahlrohsignals für die nachfolgende Verarbeitung vereinfacht zu beschreiben. Dabei kann die Hüllkurve im Wesentlichen durch Maxima und Minima des Drehzahlrohsignals bestimmt sein oder aber auch näherungsweise dem Verlauf des Drehzahlrohsignals folgen.

Bei der Plausibilisierung des Drehzahlrohsignals wird im Wesentlichen mittels geeigneter Algorithmen überprüft, ob das empfangene Drehzahlrohsignal überhaupt plausibel, d.h. physikalisch korrekt ist, bzw. ob es zum aktuellen Fahrzustand passt. Vorzugsweise wird z.B. ein Drehzahlrohsignal von -10.000 min⁻¹ an einem Rad bei Drehzahlwerten von +2000 min⁻¹ an den anderen Rädern als nicht plausibel bewertet werden und nicht für die weitere Betrachtung herangezogen werden.

In dem Verfahren der vorliegenden Erfindung schließt sich dem Signalaufbereitungsabschnitt vorzugsweise ein Kennwertbestimmungsabschnitt an, in welchem aus dem vorzugsweise durch den Signalaufbereitungsabschnitt aufbereiteten Drehzahlsignal, ein Kennwert über den aktuellen Zustand des Schienenfahrzeugs bestimmt wird.

Dieser Kennwert beschreibt vorzugsweise die Schwankungsstärke des Drehzahlsignals eines Rades, Radsatzes oder gesamten Drehgestells.

Grundgedanke bei der Kennwertbestimmung ist hierbei, dass die Drehzahl eines Rades, welches auf einer Schiene abrollt, unabhängig davon ob es sich mit konstanter Geschwindigkeit bewegt, beschleunigt oder verzögert wird, stets gewissen Schwankungen in der Drehzahl unterworfen ist. Diese Schwankungen können u.a. durch Fertigungstoleranzen, Abnutzung, Kraftschluss im Rad-Schiene-Kontakt, oder Schwankungen in der Antriebseinheit des Fahrzeugs hervorgerufen werden.

Diese Schwankungen sind jedoch in ihrer Schwankungsstärke deutlich geringer ausgeprägt, als die Drehzahlschwankungen bei einem entgleisten Rad, welches immer wieder durch unregelmäßige Berührung mit dem Boden beschleunigt oder verzögert wird.

Das Verfahren der vorliegenden Erfindung ermittelt einen kritischen Fahrzustand, oder eine Entgleisung mittels des Vergleichs des Kennwerts des mindestens einen Rades mit einem Grenzwert, wobei der Grenzwert durch das Verfahren auf Basis von Messdaten gelernt und angepasst wird.

Beispielsweise wird der Grenzwert für eine Schwankungsstärke der Raddrehzahl, ab der auf einen kritischen Zustand geschlossen werden muss, vorzugsweise durch permanentes oder phasenweises online Lernen während Fahrten im gesamten Streckennetz in der Auswerteeinheit festgelegt. So kann im Wesentlichen ein Grenzwert ermittelt werden, welcher die Gegebenheiten des Streckennetzes berücksichtigt und sich permanent darauf hin anpasst. Dadurch ist im Wesentlichen eine Reduktion des Applikationsaufwandes denkbar, da z.B. vom Hersteller nicht für jedes Land eigene Datensätze vorgehalten und gepflegt werden müssen.

Im Folgenden werden Ausführungsbeispiele für die Ermittlung eines Kennwerts beschrieben, der ein Maß für die Schwankungsstärke der Raddrehzahl darstellt. Der Vorteil bei der Ermittlung der Schwankungsstärke liegt darin, dass keine genaue Drehzahl bestimmt werden muss, sondern lediglich eine Aussage getroffen werden muss, wie stark die Drehzahl schwankt.

Die Ermittlung der Schwankungsstärke des Drehzahlsignals erfolgt vorzugsweise mit einer geeigneten Analysemethode, wie z.B. der Ermittlung der Varianz des Drehzahlsignals über einem gleitenden Zeitfenster.

In einer anderen vorteilhaften Ausführungsform der Erfindung wird die Schwankungsstärke des Drehzahlsignals vorzugsweise als Standardabweichung des Drehzahlsignals über ein gleitendes Zeitfenster bestimmt.

In einer anderen vorteilhaften Ausführungsform der Erfindung wird die Schwankungsstärke des Drehzahlsignals vorzugsweise als quadratischer Mittelwert des Drehzahlsignals über ein gleitendes Zeitfenster bestimmt.

In einer anderen vorteilhaften Ausführungsform der Erfindung wird die Schwankungsstärke des Drehzahlsignals vorzugsweise als arithmetischer Mittelwert des Drehzahlsignals über ein gleitendes Zeitfenster bestimmt.

In einer anderen vorteilhaften Ausführungsform der Erfindung wird die Schwankungsstärke des Drehzahlsignals vorzugsweise als Spannweite des Drehzahlsignals, also im Wesentlichen als Differenz zwischen geeigneten Maximal- und Minimalwerten, über ein gleitendes Zeitfenster bestimmt.

In einer anderen vorteilhaften Ausführungsform der Erfindung wird die Schwankungsstärke des Drehzahlsignals vorzugsweise als die Änderung der Frequenzanteile des Drehzahlsignals, über ein gleitendes Zeitfenster beschrieben.

Diese Frequenzanteile können vorzugsweise durch eine Fourieranalyse über das gleitende Zeitfenster bestimmt werden.

In einer anderen vorteilhaften Ausführungsform der Erfindung wird die Schwankungsstärke des Drehzahlsignals vorzugsweise als Quantil des Drehzahlsignals über ein gleitendes Zeitfenster bestimmt.

In einer anderen vorteilhaften Ausführungsform der Erfindung wird die Schwankungsstärke des Drehzahlsignals vorzugsweise als Median des Drehzahlsignals über ein gleitendes Zeitfenster bestimmt.

In einer anderen vorteilhaften Ausführungsform der Erfindung wird die Schwankungsstärke des Drehzahlsignals vorzugsweise als Variationskoeffizient des Drehzahlsignals über ein gleitendes Zeitfenster bestimmt.

In einer anderen vorteilhaften Ausführungsform der Erfindung wird die Schwankungsstärke des Drehzahlsignals vorzugsweise als mittlerer absoluter Abstand des Drehzahlsignals über ein gleitendes Zeitfenster bestimmt.

In einer anderen vorteilhaften Ausführungsform der Erfindung wird die Schwankungsstärke des Drehzahlsignals vorzugsweise als Interquartilsabstand des Drehzahlsignals über ein gleitendes Zeitfenster bestimmt.

Wie oben beschrieben, besteht der Vorteil dieser Ausführungsformen darin, dass keine genaue Drehzahl bestimmt werden muss, sondern lediglich eine Aussage getroffen werden muss, wie stark die Drehzahl schwankt.

Das gleitende Zeitfenster selbst, welches den Betrachtungs- bzw. Analysezeitraum des Drehzahlsignals festlegt, ist vorzugsweise so festzulegen, dass eine zuverlässige Unterscheidung der Zustände "Nicht-entgleist" und "Entgleist" erfolgen kann. Die Spannweite des gleitenden Zeitfensters, kann dabei von kleinen Werten unter 0,1s bis hin zu großen Werten von mehreren Sekunden, oder darüber hinaus betragen. Bei der Festlegung des gleitenden Zeitfensters ist vorzugsweise auch die Abtastrate des Signals zu berücksichtigen. Im Allgemeinen ist es die Aufgabe des Entwicklers ein geeignetes Zeitfenster festzulegen.

In einer anderen vorteilhaften Ausführungsform der Erfindung ist das gleitende Zeitfenster vorzugsweise variabel gestaltet. Die Breite des analysierten Zeitfensters kann vorzugsweise von der Geschwindigkeit des Schienenfahrzeugs bestimmt werden und vorzugsweise mit steigender Geschwindigkeit abnehmen.

In einer anderen vorteilhaften Ausführungsform der Erfindung werden die Schwankungen innerhalb des gleitenden Zeitfensters mit Gewichtungsfaktoren beaufschlagt, so dass vorzugsweise ältere Schwankungswerte gegenüber neueren geringer gewichtet werden.

Der im Kennwertbestimmungsabschnitt ermittelte Kennwert wird nun vorzugsweise an einen Alarmgenerierungsabschnitt übertragen, der im Wesentlichen in der Lage ist, aus dem aktuell gültigen Kennwert, vorzugsweise die Entscheidung zwischen Zuständen wie z.B. "Unkritisch" und "Kritisch", zu treffen. Ein unkritischer Zustand ist z.B. durch das rollende Rad auf der Schiene gegeben (nachfolgend als "Nicht-entgleist" bezeichnet), bei einem kritischen Zustand kann es sich z.B. um ein entgleistes Rad handeln.

Des Weiteren ist vorzugsweise die Ausgabe weiterer Zustände möglich, um eine detailliertere Bewertung des aktuellen Fahrzustandes zu ermöglichen. So ist vorzugsweise die Ausgabe von Zwischenzuständen, wie einem vorkritischen Zustand, möglich, um den Fahrer auf diese Situation hinzuweisen.

Vorzugsweise gibt dieser Alarmgenerierungsabschnitt bei entgleistem Zustand ein Signal aus, welches dem Fahrzeugführer über den kritischen Zustand informiert. Dieses Signal kann vorzugsweise optischer, oder akustischer Art sein.

In einer anderen vorteilhaften Ausführungsform der Erfindung löst vorzugsweise der Alarmgenerierungsabschnitt oder dessen Ausgangssignal bei entgleistem Rad eine Aktion aus. Bei dieser Aktion kann es sich vorzugsweise um eine Notbremsung bis zum Stillstand des Schienenfahrzeugs handeln.

Die Bestimmung des Zustandes "Nicht-entgleist" oder "Entgleist" wird in dem Alarmgenerierungsabschnitt vorzugsweise durch einen Vergleich des im Kennwertbestimmungsabschnitt ermittelten Kennwerts der Schwankungsstärke der Raddrehzahl mit einem Grenzwert durchgeführt.

Der Grenzwert für eine bestimmte Schwankungsstärke, ab der auf einen entgleisten Zustand geschlossen werden muss, ist vorzugsweise im Vorfeld so festzulegen, dass eine zuverlässige Erkennung einer Entgleisung sichergestellt ist.

In einer anderen vorteilhaften Ausführungsform gemäß einer nicht von den Ansprüchen umfassten Offenbarung wird der Grenzwert für eine Schwankungsstärke der Raddrehzahl, ab der auf einen kritischen Zustand geschlossen werden muss, vorzugsweise geschwindigkeitsabhängig festgelegt. So kann der Grenzwert im Wesentlichen als Kennlinie der Schwankungsstärke der Raddrehzahl über der Fahrzeuggeschwindigkeit vorgegeben werden, so dass auch geschwindigkeitsabhängige Schwankungsstärken der Raddrehzahl berücksichtigt werden können.

In einer anderen vorteilhaften Ausführungsform der Erfindung wird vorzugsweise erst dann auf einen entgleisten Zustand geschlossen, wenn der Grenzwert der Schwankungsstärke für eine bestimmte Zeitspanne überschritten wird. So ist eine gewisse Entprellung der Auswertung sichergestellt, wodurch eine irrtümliche Ermittlung eines Entgleisungszustandes aufgrund einer kurzzeitigen Grenzwertüberschreitung, z.B. durch eine verformte Schiene, vermieden wird.

In einer anderen vorteilhaften Ausführungsform der Erfindung erfolgt zudem ein Abgleich mit den Schwankungsstärken der Raddrehzahlen der anderen Räder. Dadurch kann, vorzugsweise durch Mittelwertbildung aller Schwankungsstärken, auf eine Schwankungsstärke geschlossen werden, welche auf der aktuellen Strecke einem nicht-entgleisten Zustand entspricht.

In einer anderen vorteilhaften Ausführungsform der Erfindung erfolgt zudem ein Abgleich der aktuellen Schwankungsstärke des Drehzahlsignals eines Rades gegenüber den Schwankungsstärken desselben Rades zu früheren Zeitpunkten, welche vorzugsweise in der Auswerteeinheit zwischengespeichert werden. Eine Erkennung eines Entgleisungsvorgangs erfolgt vorzugsweise dadurch, dass die Schwankungsstärke über der Zeit bei einem entgleisten Rad zunimmt. Dies kann im Wesentlichen durch eine Betrachtung der absoluten Zunahme der Schwankungsstärke erfolgen, oder durch eine Ermittlung des Gradienten der Schwankungsstärke. Als Gradient ist dabei vorzugsweise die Änderung der Schwankungsstärke über der Zeit zu definieren.

Ein so ermittelter Gradient kann im Wesentlichen wieder mit den zuvor beschriebenen Methoden bewertet werden.

In einer vorteilhaften Ausführungsform der Erfindung werden mindestens zwei zuvor beschriebene Auswerteverfahren kombiniert. Vorzugsweise ist eine geeignete Auswahllogik vorgesehen, welche unterscheidet, ob ein Abgleich gegen einen Grenzwert, oder ein Abgleich gegen einen aktuellen Mittelwert der Schwankungsstärken vorzugsweise aller Raddrehzahlen, oder ein Abgleich gegen Schwankungsstärken von Raddrehzahlen früherer Zeitpunkte desselben Rades zu einer Entscheidung über den Zustand "Nicht-entgleist" oder "Entgleist" führt.

In einer anderen vorteilhaften Ausführungsform der Erfindung wird die Ermittlung des Zustandes "Nicht-entgleist" oder "Entgleist" durch eine Kombination von mindestens zwei dieser Auswertekriterien durchgeführt.

Weitere vorteilhafte Ausführungsformen der Erfindung können durch Kombination mindestens zweier zuvor beschriebener Ausführungsformen erhalten werden.

Die Erfindung ist vorzugsweise in jeder Ausführungsform mit anderen Verfahren oder Vorrichtungen zur Entgleisungsdetektion, oder zur Analyse und Bewertung des Fahrzustandes kombinierbar und weist vorzugsweise entsprechende Schnittstellen auf, um mit anderen Verfahren oder Vorrichtungen Signale oder Daten austauschen zu können. Andere Verfahren oder Vorrichtungen, welche auf Messung und Auswertung weiterer physikalischer Größen basieren oder diese nutzen, können dabei vorzugsweise Verfahren zur Ermittlung von Schwellenfachfrequenzen, der Kreuzkorrelationen von Beschleunigungen, oder des Abgleichs von Raddrehzahlsignalen gegenüber einer Referenzdrehzahl, welche beispielsweise aus einer GPS-basierten Geschwindigkeit ermittelt wurde, erfolgen.

Vorzugsweise ist die Erfindung in einen Verbund zur Entgleisungsdetektion bzw. der Analyse des Fahrzustandes eingebunden, in dem die Rückmeldungen sämtlicher Teilsysteme verarbeitet werden.

Die Erfindung kann vorzugsweise in der Form eines Computerprogrammprodukts vorliegen, welches das oben beschriebene Verfahren abarbeitet, und welches vorzugsweise auf einem maschinenlesbaren Träger gespeichert ist. Das Computerprogrammprodukt kann vorzugsweise auf geeignete, bereits vorhandene Steuervorrichtungen des Schienenfahrzeugs übertragen werden. So können auch bestehende Schienenfahrzeuge nachgerüstet werden.

Die Erfindung kann in einer weiteren vorteilhaften Ausführungsform als Steuervorrichtung vorliegen, welche ein Computerprogrammprodukt nutzt, welches das oben beschriebene Verfahren abarbeitet, und welches vorzugsweise auf einem maschinenlesbaren Träger gespeichert ist. Eine derartige Steuervorrichtung bietet den Vorteil, dass sie unabhängig von bereits bestehenden Vorrichtungen nachgerüstet werden kann.

Die Steuervorrichtung weist in einer weiteren Vorteilhaften Ausführungsform geeignete Schnittstellen zur Auslösung einer Aktion im Schienenfahrzeug auf. Diese können z.B. in Form von ansteuerbaren Warnleuchten im Führerstand oder ansteuerbaren Stellvorrichtungen des Bremssystems vorliegen.

Im Folgenden erfolgt die Beschreibung der Erfindung anhand bevorzugter Ausführungsbeispiele unter Bezugnahme auf die beigefügten Zeichnungen.

Im Einzelnen zeigt:
- Fig. 1: einen prinzipiellen Aufbau der Entgleisungsdetektion an einem einzelnen Rad und die Weiterverarbeitung der Signale in einer Auswerteeinheit
- Fig. 2: einen qualitativen Zeitverlauf einer Raddrehzahl, für die Zustände "Rad auf der Schiene" (links) und "Rad entgleist" (rechts) sowie einen schematische Bewertung des Fahrzustands anhand der Spannweite als Maß der Schwankungsstärke

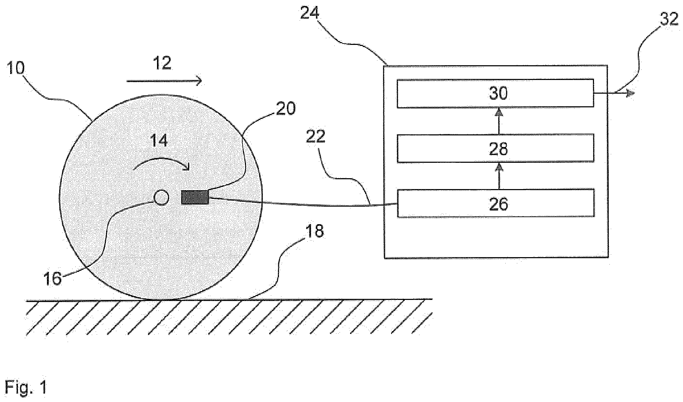

Fig. 1 zeigt eine Ausführungsform eines Aufbaus einer Entgleisungsdetektion an einem einzelnen Rad 10. Das Rad 10 ist auf einer Welle 16, welche mit dem Schienenfahrzeug (nicht dargestellt) in Verbindung steht, drehbar gelagert und bewegt sich nach rechts in Fahrtrichtung 12 fort. Das Rad 10 führt dabei eine Drehbewegung 14 um die Welle 16 aus. Das Rad 10 rollt während der Fahrt auf dem Untergrund 18 ab. Der Untergrund 18 kann dabei die Schiene sein oder, falls das Rad 10 entgleist ist, der Oberbau des Gleisbettes, oder dergleichen.

An dem Schienenfahrzeug ist eine Drehzahlerfassungsvorrichtung 20 derart angebracht, dass sie die Drehzahl des Rades 10 erfassen kann.

Das Drehzahlrohsignal 22 am Ausgang der Drehzahlerfassungsvorrichtung 20 wird an eine Auswerteeinheit 24 übermittelt. In der Auswerteeinheit 24 sind mehrere Abschnitte (26, 28, 30) in Serie angeordnet. Zunächst wird das Drehzahlrohsignal 22 an einen Signalaufbereitungsabschnitt 26 übermittelt, der das rohe Drehzahlsignal 22 mittels geeigneter Aufbereitungsoperationen (z.B. Anti-Aliasing-Filterung, Digitalisierung, Abtastung, Offsetabgleich, etc.) für die weitere Analyse verwertbar gestaltet. Das so aufbereitete Signal wird an einen Kennwertbestimmungsabschnitt 28 übergeben.

In dem Kennwertbestimmungsabschnitt 28 wird mittels geeigneter Auswerteoperationen (z.B. Berechnung der Varianz, Standardabweichung, Quantil, quadratisches Mittel, arithmetisches Mittel, Spannweite, Frequenzanteile, etc.) die Schwankungsstärke des Drehzahlsignals als Kennwert des aktuellen Fahrzustandes bestimmt. Das Ergebnis wird an einen Alarmgenerierungsabschnitt 30 übergeben.

In dem Alarmgenerierungsabschnitt 30 erfolgt der Abgleich, der in dem Kennwertbestimmungsabschnitt 28 ermittelten Schwankungsstärke, mit Grenzwerten, die zuvor vom Entwickler festgelegt wurden. Zusätzlich kann die ermittelte Schwankungsstärke mit den Schwankungsstärken anderer Räder, welche auf die gleiche Weise ermittelt wurden, oder einem Mittelwert der Schwankungsstärken verglichen werden. Zusätzlich kann ein Abgleich der Schwankungsstärke eines Rades über der Zeit erfolgen, so dass eine Entgleisung eine Erhöhung der Schwankungsstärke gegenüber zuvor bestimmten Schwankungsstärken zur Folge hätte.

Der Alarmgenerierungsabschnitt 30 ist derart konfiguriert, dass er aus einer, oder mehreren dieser Abgleichsoperationen auf einen der Zustände "Nicht-entgleist" oder "Entgleist" schließen kann. Wurde ein Zustand "Entgleist" erkannt, so löst der Alarmgenerierungsabschnitt 30 eine Aktion 32 aus. Dabei kann es sich um eine Benachrichtigung des Zugführers bis hin zu einer selbstständigen Notbremsung bis zum Stillstand des Zuges handeln.

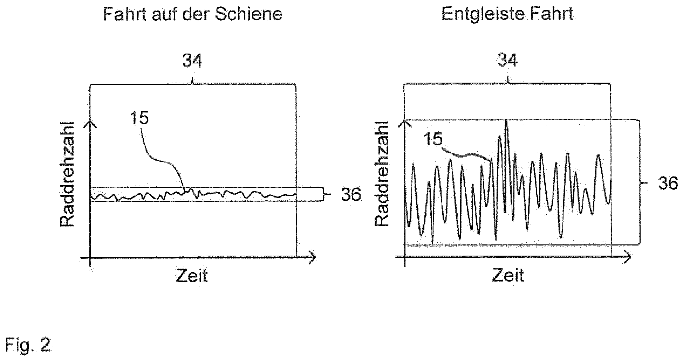

Fig. 2 zeigt einen qualitativen Zeitverlauf der Drehzahl 15 des Rades 10. Dabei zeigt das Diagramm links qualitativ einen typischen Drehzahlverlauf eines Rades, das mit konstanter Geschwindigkeit auf der Schiene fährt, also nicht entgleist ist.

Der Verlauf der Raddrehzahl 15 unterliegt gewissen Schwankungen, die durch Fertigungstoleranzen, Abnutzung oder Schwankungen in der Antriebseinheit des Fahrzeugs hervorgerufen werden können. Allerdings sind diese Schwankungen im Vergleich zum Diagramm rechts wesentlich kleiner.

Im rechten Diagramm ist qualitativ ein typischer Zeitverlauf der Raddrehzahl 15 bei entgleistem Rad gezeigt. Die Raddrehzahl unterliegt wesentlich stärkeren Schwankungen, da das Rad immer wieder auf dem Boden, sei es ein klassischer Oberbau mit Schwellen und Schotter, oder eine glatte Betonfahrbahn, aufschlägt und dadurch bremsende, oder beschleunigende Impulse erhält.

Aufgrund dieser beiden qualitativen Zeitverläufe der Raddrehzahl 15 ist erkennbar, dass eine Detektion eines entgleisten Rades über Messung und Auswertung der Drehzahl einer oder mehrerer Räder sinnvoll ist, um zuverlässig zwischen beiden Zuständen "Nicht-entgleist" und "Entgleist" unterscheiden zu können.

In den Diagrammen ist weiterhin ein gleitendes Zeitfenster 34 dargestellt, über dem der Fahrzustand analysiert wird. Als Beispiel für einen Auswertevorgang des Fahrzustandes ist hier die Spannweite 36, also die Differenz zwischen Maximal- und Minimalwert der Raddrehzahl dargestellt. Bei entgleistem Rad vergrößert sich die Spannweite 36 derart, dass eine Entgleisung zuverlässig erkannt werden kann.

### BEZUGSZEICHENLISTE

- 10: Rad
- 12: Fahrtrichtung
- 14: Drehrichtung
- 15: Raddrehzahl
- 16: Welle
- 18: Untergrund
- 20: Drehzahlerfassungsvorrichtung
- 22: Drehzahlrohsignal
- 24: Auswerteeinheit
- 26: Signalaufbereitungsabschnitt
- 28: Kennwertbestimmungsabschnitt
- 30: Alarmgenerierungsabschnitt
- 32: ausgelöste Aktion
- 34: gleitendes Zeitfenster
- 36: Schwankungsstärke Raddrehzahl (Spannweite)

## Patentansprüche

1. Verfahren zur Bestimmung einer kritischen Fahrsituation mindestens eines Rades (10) eines Schienenfahrzeugs, wobei
ein Kennwert einer Schwankungsstärke eines Drehzahlrohsignals (22) mindestens eines Rades (10) bestimmt wird, und
dieser Kennwert zur Bewertung der Fahrsituation mit Kriterien verglichen wird, welche eine kritische Fahrsituation beschreiben, wobei
das Verfahren bei Erkennen einer kritischen Fahrsituation eine Aktion im Schienenfahrzeug auslöst, wobei
das Verfahren einen kritischen Fahrzustand, oder eine Entgleisung mittels des Vergleichs des Kennwerts des mindestens einen Rades (10) mit einem Grenzwert ermittelt, wobei
der Grenzwert durch das Verfahren auf Basis von Messdaten gelernt und angepasst wird.

2. Verfahren gemäß Anspruch 1, wobei
als Kennwert für die Schwankungsstärke der Raddrehzahlen die Varianz des Drehzahlsignals des mindestens einen Rades (10) verwendet wird.

3. Verfahren gemäß Anspruch 1, wobei
als Kennwert für die Schwankungsstärke der Raddrehzahlen die Standardabweichung des Drehzahlsignals des mindestens einen Rades (10) verwendet wird.

4. Verfahren gemäß Anspruch 1, wobei
als Kennwert für die Schwankungsstärke der Raddrehzahlen das quadratische Mittel des Drehzahlsignals des mindestens einen Rades (10) verwendet wird.

5. Verfahren gemäß Anspruch 1, wobei
als Kennwert für die Schwankungsstärke der Raddrehzahlen das arithmetische Mittel des Drehzahlsignals des mindestens einen Rades (10) verwendet wird.

6. Verfahren gemäß Anspruch 1, wobei
als Kennwert für die Schwankungsstärke der Raddrehzahlen die Spannweite des Drehzahlsignals des mindestens einen Rades (10) verwendet wird.

7. Verfahren gemäß Anspruch 1, wobei
als Kennwert für die Schwankungsstärke der Raddrehzahlen die Frequenzanteile des Drehzahlsignals des mindestens einen Rades (10) verwendet wird.

8. Verfahren gemäß Anspruch 1, wobei
als Kennwert für die Schwankungsstärke der Raddrehzahlen das Quantil des Drehzahlsignals des mindestens einen Rades (10) verwendet wird.

9. Verfahren gemäß Anspruch 1, wobei
als Kennwert für die Schwankungsstärke der Raddrehzahlen der Median des Drehzahlsignals des mindestens einen Rades (10) verwendet wird.

10. Verfahren gemäß Anspruch 1, wobei
als Kennwert für die Schwankungsstärke der Raddrehzahlen der Variationskoeffizient des Drehzahlsignals des mindestens einen Rades (10) verwendet wird.

11. Verfahren gemäß Anspruch 1, wobei
als Kennwert für die Schwankungsstärke der Raddrehzahlen der mittlere absolute Abstand des Drehzahlsignals des mindestens einen Rades (10) verwendet wird.

12. Verfahren gemäß Anspruch 1, wobei
als Kennwert für die Schwankungsstärke der Raddrehzahlen der Interquartilsabstand des Drehzahlsignals des mindestens einen Rades (10) verwendet wird.

13. Verfahren gemäß mindestens einem der Ansprüche 1 bis 12, wobei
das Verfahren einen kritischen Fahrzustand, oder eine Entgleisung mittels des Vergleichs mindestens zweier Kennwerte einzelner Räder (10) ermittelt.

14. Verfahren gemäß mindestens einem der Ansprüche 1 bis 12, wobei
das Verfahren einen kritischen Fahrzustand, oder eine Entgleisung mittels des Vergleichs mindestens eines Kennwerts mindestens eines Rades (10) mit einem mittleren Kennwert anderer Räder (10) ermittelt.

15. Verfahren gemäß mindestens einem der Ansprüche 1 bis 12, wobei
das Verfahren einen kritischen Fahrzustand, oder eine Entgleisung mittels des Vergleichs mindestens eines Kennwerts des mindestens einen Rades (10) gegenüber zeitlich zurückliegenden Kennwerten desselben Rades (10) ermittelt.

16. Verfahren gemäß mindestens einem der vorangegangenen Ansprüche, wobei
die bei Erkennung einer kritischen Situation durch das Verfahren ausgelöste Aktion ein Alarm an den Fahrzeugführer ist.

17. Verfahren gemäß mindestens einem der Ansprüche 1 bis 15, wobei
die bei Erkennung einer kritischen Situation durch das Verfahren ausgelöste Aktion eine automatisch ausgelöste Abbremsung des Schienenfahrzeugs ist.

18. Verfahren gemäß mindestens einem der vorangegangenen Ansprüche, wobei das Drehzahlrohsignal (22) zur weiteren Verarbeitung aufbereitet wird.

19. Verfahren gemäß mindestens einem der vorangegangenen Ansprüche, wobei
das Verfahren mit anderen, bestehenden Verfahren zur Entgleisungsdetektion kombinierbar ist.

20. Computerprogrammprodukt mit auf einem maschinenlesbaren Träger gespeichertem Programmcode, der bei der Ausführung durch einen Computer diesen zur Durchführung des Verfahrens gemäß mindestens einem der Ansprüche 1 bis 19 veranlasst.

21. Steuervorrichtung zur Durchführung des Verfahrens gemäß mindestens einem der Ansprüche 1 bis 19, wobei
die Steuervorrichtung in einem Schienenfahrzeug vorgesehen ist.

22. Steuervorrichtung gemäß Anspruch 21, wobei
die Steuervorrichtung Schnittstellen zum Auslösen einer Aktion im Schienenfahrzeug aufweist.

## Claims

1. Method for determining a critical driving situation of at least one wheel (10) of a rail vehicle, wherein
a characteristic value of a degree of fluctuation of a raw speed signal (22) of at least one wheel (10) is determined, and
this characteristic value is compared with criteria, which describe a critical driving situation, for evaluating the driving situation, wherein
on detection of a critical driving situation, the method triggers an action in the rail vehicle, wherein
the method ascertaines a critical driving condition or a derailment by means of comparing the characteristic value of the at least one wheel (10) with a threshold value, wherein
the threshold value is learned and adjusted by the method on the basis of measurement data.

2. Method according to claim 1, wherein
the variance of the speed signal of the at least one wheel (10) is used as the characteristic value for the degree of fluctuation of the wheel speeds.

3. Method according to claim 1, wherein
the standard deviation of the speed signal of the at least one wheel (10) is used as the characteristic value for the degree of fluctuation of the wheel speeds.

4. Method according to claim 1, wherein
the root mean square of the speed signal of the at least one wheel (10) is used as the characteristic value for the degree of fluctuation of the wheel speeds.

5. Method according to claim 1, wherein
the arithmetic mean of the speed signal of the at least one wheel (10) is used as the characteristic value for the degree of fluctuation of the wheel speeds.

6. Method according to claim 1, wherein
the range of the speed signal of the at least one wheel (10) is used as the characteristic value for the degree of fluctuation of the wheel speeds.

7. Method according to claim 1, wherein
the frequency components of the speed signal of the at least one wheel (10) are used as the characteristic value for the degree of fluctuation of the wheel speeds.

8. Method according to claim 1, wherein
the quantile of the speed signal of the at least one wheel (10) is used as the characteristic value for the degree of fluctuation of the wheel speeds.

9. Method according to claim 1, wherein
the median of the speed signal of the at least one wheel (10) is used as the characteristic value for the degree of fluctuation of the wheel speeds.

10. Method according to claim 1, wherein
the coefficient of variation of the speed signal of the at least one wheel (10) is used as the characteristic value for the degree of fluctuation of the wheel speeds.

11. Method according to claim 1, wherein
the average absolute range of the speed signal of the at least one wheel (10) is used as the characteristic value for the degree of fluctuation of the wheel speeds.

12. Method according to claim 1, wherein
the interquartile range of the speed signal of the at least one wheel (10) is used as the characteristic value for the degree of fluctuation of the wheel speeds.

13. Method according to at least one of claims 1 to 12, wherein
the method ascertaines a critical driving condition or a derailment by means of comparing at least two characteristic values of individual wheels (10).

14. Method according to at least one of claims 1 to 12, wherein
the method ascertaines a critical driving condition or a derailment by means of comparing at least one characteristic value of at least one wheel (10) with a mean characteristic value of other wheels (10).

15. Method according to at least one of claims 1 to 12, wherein
the method ascertaines a critical driving condition or a derailment by means of comparing at least one characteristic value of the at least one wheel (10) with earlier characteristic values of the same wheel (10).

16. Method according to at least one of the preceding claims, wherein
the action triggered by the method on detecting a critical situation is an alarm for the vehicle driver.

17. Method according to at least one of claims 1 to 15, wherein
the action triggered by the method on detecting a critical situation is an automatically triggered deceleration of the rail vehicle.

18. Method according to at least one of the preceding claims, wherein
the raw speed signal (22) is prepared for further processing.

19. Method according to at least one of the preceding claims, wherein
the method can be combined with other existing derailment detection methods.

20. Computer program product with program code stored on a machine-readable medium, which when executed by a computer, prompts the latter to perform the method according to at least one of claims 1 to 19.

21. Control device for performing the method according to at least one of claims 1 to 19, wherein
the control device is provided in a rail vehicle.

22. Control device according to claim 21, wherein
the control device has interfaces for triggering an action in the rail vehicle.

## Revendications

1. Procédé de détermination d'une situation de roulement critique au moins d'une roue (10) d'un véhicule ferroviaire, dans lequel
une valeur caractéristique d'une intensité de fluctuation d'un signal brut de vitesse de rotation (22) au moins d'une roue (10) est déterminée et
cette valeur caractéristique d'évaluation de la situation de roulement est comparée à des critères qui décrivent une situation de roulement critique, dans lequel
le procédé déclenche une action dans le véhicule ferroviaire lorsqu'une situation de roulement critique est détectée, dans lequel
le procédé détermine un état de roulement critique ou un déraillement au moyen de la comparaison de la valeur caractéristique de la au moins une roue (10) avec une valeur limite, dans lequel
la valeur limite est apprise et adaptée par le procédé sur la base de données de mesure.

2. Procédé selon la revendication 1, dans lequel
la variance du signal de vitesse de rotation de la au moins une roue (10) est utilisée comme valeur caractéristique pour l'intensité de fluctuation des vitesses de rotation de roue.

3. Procédé selon la revendication 1, dans lequel
l'écart standard du signal de vitesse de rotation de la au moins une roue (10) est utilisé comme valeur caractéristique pour l'intensité de fluctuation des vitesses de rotation de roue.

4. Procédé selon la revendication 1, dans lequel
la moyenne quadratique du signal de vitesse de rotation de la au moins une roue (10) est utilisée comme valeur caractéristique pour l'intensité de fluctuation des vitesses de rotation de roue.

5. Procédé selon la revendication 1, dans lequel
la moyenne arithmétique du signal de vitesse de rotation de la au moins une roue (10) est utilisée comme valeur caractéristique pour l'intensité de fluctuation des vitesses de rotation de roue.

6. Procédé selon la revendication 1, dans lequel
la portée du signal de vitesse de rotation de la au moins une roue (10) est utilisée comme valeur caractéristique pour l'intensité de fluctuation des vitesses de rotation de roue.

7. Procédé selon la revendication 1, dans lequel
les parts de fréquence du signal de vitesse de rotation de la au moins une roue (10) sont utilisées comme valeur caractéristique pour l'intensité de fluctuation des vitesses de rotation de roue.

8. Procédé selon la revendication 1, dans lequel
le quantile du signal de vitesse de rotation de la au moins une roue (10) est utilisé comme valeur caractéristique pour l'intensité de fluctuation des vitesses de rotation de roue.

9. Procédé selon la revendication 1, dans lequel
la médiane du signal de vitesse de rotation de la au moins une roue (10) est utilisée comme valeur caractéristique pour l'intensité de fluctuation des vitesses de rotation de roue.

10. Procédé selon la revendication 1, dans lequel
le coefficient de variation du signal de vitesse de rotation de la au moins une roue (10) est utilisé comme valeur caractéristique pour l'intensité de fluctuation des vitesses de rotation de roue.

11. Procédé selon la revendication 1, dans lequel
l'écart absolu moyen du signal de vitesse de rotation de la au moins une roue (10) est utilisé comme valeur caractéristique pour l'intensité de fluctuation des vitesses de rotation de roue.

12. Procédé selon la revendication 1, dans lequel
l'écart interquartile du signal de vitesse de rotation de la au moins une roue (10) est utilisé comme valeur caractéristique pour l'intensité de fluctuation des vitesses de rotation de roue.

13. Procédé selon au moins l'une quelconque des revendications 1 à 12, dans lequel
le procédé détermine un état de roulement critique ou un déraillement au moyen de la comparaison d'au moins deux valeurs caractéristiques de roues individuelles (10).

14. Procédé selon au moins l'une quelconque des revendications 1 à 12, dans lequel
le procédé détermine un état de roulement critique ou un déraillement au moyen de la comparaison d'au moins une valeur caractéristique d'au moins une roue (10) avec une valeur caractéristique moyenne d'autres roues (10).

15. Procédé selon au moins l'une quelconque des revendications 1 à 12, dans lequel
le procédé détermine un état de roulement critique ou un déraillement au moyen de la comparaison d'au moins une valeur caractéristique de la au moins une roue (10) par rapport à des valeurs caractéristiques antérieures de la même roue (10).

16. Procédé selon au moins l'une quelconque des revendications précédentes, dans lequel
l'action déclenchée lors de la détection d'une situation critique par le procédé est une alarme émise à l'attention du conducteur du véhicule.

17. Procédé selon au moins l'une quelconque des revendications 1 à 15, dans lequel
l'action déclenchée lors de la détection d'une situation critique par le procédé est un freinage du véhicule ferroviaire déclenché automatiquement.

18. Procédé selon au moins l'une quelconque des revendications précédentes, dans lequel
le signal brut de vitesse de rotation (22) est préparé pour la suite du traitement.

19. Procédé selon au moins l'une quelconque des revendications précédentes, dans lequel
le procédé peut être combiné à d'autres procédés existants pour la détection du déraillement.

20. Produit de programme informatique avec un code de programme enregistré sur un support lisible par machine qui, lorsqu'il est exécuté par un ordinateur, cause ce dernier à mettre en œuvre le procédé selon au moins l'une quelconque des revendications 1 à 19.

21. Dispositif de commande pour la mise en œuvre du procédé selon au moins l'une quelconque des revendications 1 à 19, dans lequel
le dispositif de commande est prévu dans un véhicule ferroviaire.

22. Dispositif de commande selon la revendication 21, dans lequel
le dispositif de commande présente des interfaces pour déclencher une action dans le véhicule ferroviaire.
